# FASCICULE DE BREVET EUROPEEN

(11) **EP 3 023 766 B1**
(45) Date de publication et mention de la délivrance du brevet: **22.09.2021**
(21) Numéro de dépôt: 15195951.7
(22) Date de dépôt: 24.11.2015
(51) Int. Cl.: G01N 15/08

(54) **PROCÉDÉ ET DISPOSITIF DE MESURE DE PERMÉATION PAR SPECTROMÉTRIE DE MASSE**
VERFAHREN UND VORRICHTUNG ZUR DURCHLÄSSIGKEITSMESSUNG MIT MASSENSPEKTROMETRIE
METHOD AND DEVICE FOR MEASURING PERMEATION BY MASS SPECTROMETRY

(30) Priorité: 24.11.2014 FR 1461342
(43) Date de publication de la demande: 25.05.2016
(73) Titulaire: COMMISSARIAT À L'ÉNERGIE ATOMIQUE ET AUX ÉNERGIES ALTERNATIVES, 75015 Paris (FR)
(72) Inventeur: CROS, Stéphane, 73000 CHAMBERY (FR); JAUBERT, Fabien, 38120 SAINT EGREVE (FR); LEROY, Arnaud, 57660 Vahl Ebersing (FR); WALSH, Christine, 92110 CLICHY (FR)
(74) Mandataire: Regimbeau

(56) Documents cités:
- EP-A1- 2 682 736
- US-A1- 2004 123 646
- US-A1- 2009 320 564
- US-A1- 2010 223 979

## Description

### DOMAINE DE L'INVENTION

La présente invention concerne le domaine de la perméation de gaz, et plus particulièrement un dispositif et une méthode de mesure de perméation de gaz à travers des matériaux solides.

### ETAT DE LA TECHNIQUE

La sélection de matériaux pour certaines applications, telles que le conditionnement ou l'électronique par exemple, nécessite l'étude de la perméation de certains gaz à travers ces matériaux. Par perméation, on entend le mécanisme de passage d'un gaz à travers un matériau suivant les étapes d'absorption du gaz dans le matériau, de diffusion de ce gaz à travers le matériau, et de désorption du gaz de l'autre côté du matériau. Par exemple, les mesures de perméation de gaz comme l'oxygène ou la vapeur d'eau, à travers les matériaux à sélectionner, sont les plus répandues.

Dans le cas des matériaux destinés au conditionnement agroalimentaire par exemple, l'étude de la perméation des gaz courants à travers les matériaux, et plus particulièrement de l'oxygène et de la vapeur d'eau, sont critiques. Les niveaux requis de perméabilité à ces gaz sont extrêmement faibles, et l'étude de la perméation nécessite par conséquent des dispositifs de mesure de perméation présentant des sensibilités importantes.

En réponse à cette problématique, de nombreux dispositifs de mesure de perméation ont été développés, reposant sur divers principes de suivi de gaz, et présentant chacun leurs inconvénients.

Il a été en particulier développé un dispositif de mesure des flux de perméation comprenant une enceinte de mesure sous ultravide. Le film barrière dont la perméation est à étudier est placé à l'interface entre deux chambres. La chambre amont au film barrière est remplie avec une pression contrôlée du gaz cible, par exemple de la vapeur d'eau ou de l'oxygène. La chambre avale est mise sous vide et couplée à un appareil de mesure capable de détecter le gaz cible ayant diffusé par perméation au travers de l'échantillon à tester, comme par exemple un spectromètre de masse. Le gaz présent dans la chambre amont est transmis dans la chambre avale par un processus de perméation et la mesure de perméation du film consiste en la détection du flux transmis par le moyen de détection mis en place côté aval. La détection du flux consiste en la mesure d'un courant d'ionisation correspondant à la masse du gaz cible. La mesure est alors convertie en flux de gaz transmis par unité de surface J(t) (en g.m⁻².d⁻¹) en utilisant un échantillon de référence ou une fuite calibrée de référence qui génère un flux contrôlé du gaz cible.

Pour augmenter la sensibilité des mesures effectuées avec de tels dispositifs, il a été proposé d'utiliser, pour un gaz dont on cherche à connaître la perméation à travers le matériau, un gaz isotopique de ce gaz, c'est-à-dire ayant un nombre de masse différent. Ainsi, en utilisant par exemple un spectromètre de masse comme analyseur dans l'enceinte de mesure, il est possible de réduire les seuils de détection de la perméation de plusieurs ordres de grandeur. En effet, l'abondance isotopique naturelle de ces éléments étant très faible, la pollution de l'enceinte par ces espèces est d'autant moins importante.

Le brevet US 6,624,621 décrit un dispositif de mesure de perméation reprenant les principes mentionnés ci-dessus et qui présente en outre l'avantage d'effectuer des mesures de perméation pour plusieurs gaz différents de manière simultanée, ce qui permet d'avoir des mesures présentant une bonne sensibilité et rend la sélection des matériaux plus rapide.

L'usage d'un spectromètre de masse comme moyen de mesure est en effet bien adapté car il permet de mesurer une grande variété de gaz et l'usage d'isotope comme gaz cible permet d'accéder à une grande sensibilité de mesure adéquat pour la mesure des matériaux hautement barrière. Un spectromètre de masse est un moyen d'analyse permettant de détecter et d'identifier des molécules d'intérêt par mesure de leur masse. Dans une enceinte placée en situation de vide dynamique, le spectromètre de masse permet de mesurer les pressions des gaz résiduels. Dans le cas d'une mesure de perméation, le flux de perméation de l'échantillon va se traduire par une augmentation de la pression résiduelle du gaz cible jusqu'à une valeur stabilisée qui constitue la valeur de perméation. Le signal issu du spectromètre de masse correspond au courant d'ionisation (éventuellement amplifié) des masses d'intérêt correspondant au gaz cible dont une cherche à connaître la perméation à travers l'échantillon. Par exemple, on mesurera la masse 4 pour l'hélium, la masse 18 pour l'eau ou encore la masse 20 pour l'eau lourde.

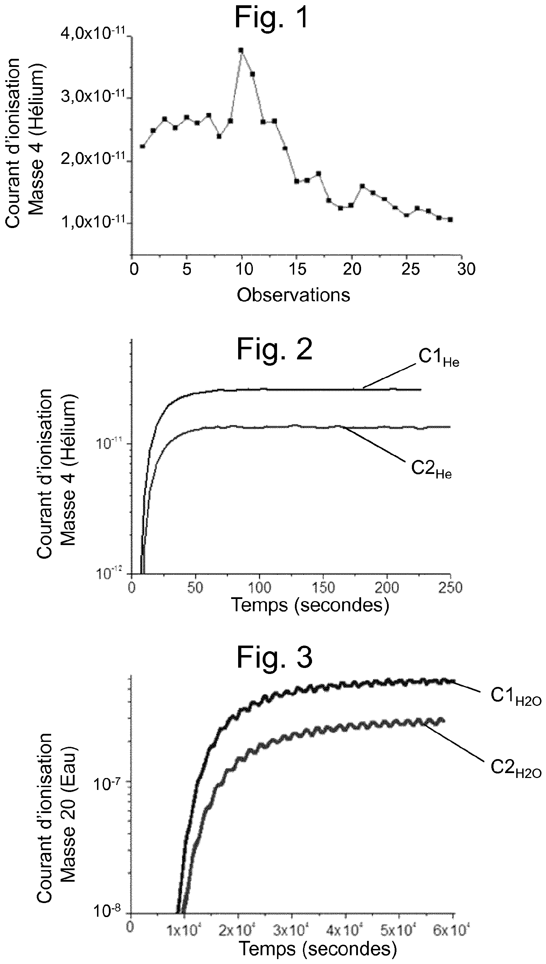

Il a toutefois été constaté que le courant d'ionisation du spectromètre de masse pour une masse donnée pouvait varier avec le temps sans que cela ne corresponde à une variation réelle de la pression partielle dans l'enceinte. Cette constatation a été établie en réalisant des mesures de perméation au gaz hélium avec un matériau de référence (par exemple un film de polyester stocké dans des conditions contrôlées). La mesure correspond alors au courant d'ionisation de la masse 4 dans le régime de perméation stabilisé. La figure 1 présente un ensemble de telles mesures réalisées dans des conditions strictement identiques (température, pression amont en hélium, échantillon de référence). Sur la figure 1 est représentée la carte de contrôle de la mesure de perméation à l'hélium du matériau de référence. On constate une variabilité significative du courant d'ionisation entre les différentes mesures alors que ces dernières devraient être identiques.

Cette variabilité oblige à contrôler systématiquement la référence avant toute série de mesure afin de calibrer l'appareil et pouvoir comparer les mesures entre elles. Ces étapes de calibrations sont faites avant et/ou après la mesure de perméation sur l'échantillon à tester. On peut par exemple utiliser un film de référence ou utiliser des fuites calibrées qui délivrent une quantité contrôlée de gaz cible dans l'enceinte de mesure et permettent ainsi de calibrer le spectromètre de masse. La demande de brevet US 2010/0223979 donne un exemple de procédé où une calibration est effectuée avant les mesures de perméation en tant que telles, cette calibration pouvant être par exemple réalisée avec un flux d'un mélange de gaz dans lequel le gaz cible est très dilué, c'est-à-dire présent en très faible quantité. Ces étapes de calibration sont toutefois problématiques car elles viennent rallonger significativement les durées des mesures de perméation qui sont déjà très longues. En outre, elles ne sont pas totalement satisfaisantes puisqu'elles ne permettent pas de corriger finement les différentes modifications du signal du spectromètre de masse pouvant intervenir au cours de la mesure de perméation.

Un but de la présente invention est donc de proposer un procédé de mesure de perméation amélioré et un dispositif associé qui permettent de résoudre au moins l'un des inconvénients précités.

Plus particulièrement un but de la présente invention est de proposer un procédé de mesure de perméation amélioré et un dispositif associé, qui permettent de fournir des mesures de perméation fiables et précises, tout en ne venant pas rallonger les temps de mesure habituels.

### EXPOSE DE L'INVENTION

A cette fin, on propose un procédé de mesure de perméation de gaz à travers un matériau agencé dans une enceinte de perméation comprenant une première et une deuxième chambre, la première chambre étant séparée de la deuxième chambre par le matériau, et la deuxième chambre étant en communication fluidique avec une enceinte de mesure, le procédé comprenant les étapes suivantes :
a) Alimentation en gaz de l'enceinte de perméation au cours de laquelle on alimente la première chambre, avec un flux de gaz cible comprenant au moins un gaz cible correspondant à un gaz dont on cherche à connaître la perméation à travers le matériau, et alimentation simultanée en gaz de l'enceinte de mesure avec au moins un flux calibré comprenant au moins un gaz de référence, le gaz de référence étant différent du gaz cible ;
b) Pendant l'étape d'alimentation en gaz, mesure dans l'enceinte de mesure du gaz de référence présent à un instant (t) et du gaz cible présent au même instant (t) provenant de la deuxième chambre après avoir traversé le matériau par perméation ;
c) Calcul d'un facteur de correction à l'instant (t) par comparaison de la mesure du gaz de référence présent à l'instant (t) avec le flux calibré d'alimentation en gaz de référence ; et
d) Détermination de la perméation du matériau audit gaz, à partir de la mesure du gaz cible présent à l'instant (t) corrigée du facteur de correction à l'instant (t).

Des aspects préférés mais non limitatifs de ce procédé, pris seuls ou en combinaison, sont les suivants :
- les étapes b) et c) de mesure des gaz présents dans l'enceinte de mesure et de calcul du facteur de correction sont effectuées plusieurs fois au cours du temps pendant l'étape a) d'alimentation en gaz, l'étape d) de calcul de la perméation du matériau au gaz étant réalisée à partir des différentes mesures du gaz cible au cours du temps, chaque mesure de gaz cible étant corrigée du facteur de correction correspondant.
- le gaz de référence est un gaz neutre vis-à-vis du gaz cible. Par gaz neutre vis-à-vis d'un gaz cible, on entend un gaz dont la présence avec ledit gaz cible ne vient pas influencer la mesure dudit gaz cible.
- le flux calibré de gaz de référence comprend plusieurs gaz de référence différents, où l'étape b) comprend la mesure simultanée des différents gaz de référence présents dans l'enceinte de mesure à l'instant (t), et où à l'étape c) on calcule plusieurs facteurs de correction à l'instant (t) à partir de la comparaison de la mesure de chaque gaz de référence présent à l'instant (t) avec le flux calibré du gaz de référence correspondant.
- à l'étape d), on choisit le facteur de correction correspondant au gaz de référence dont la mesure à l'instant (t) est la plus proche en intensité de la mesure du gaz cible présent à l'instant (t).
- le flux de gaz cible comprend plusieurs gaz cibles différents, correspondant à plusieurs gaz dont on cherche à connaître la perméation à travers le matériau, l'étape b) comprenant la mesure simultanée des différents gaz cibles présents dans l'enceinte de mesure à l'instant (t).
- le flux de gaz de référence comprend au moins un gaz choisi parmi l'Argon (Ar), l'Azote (N), le Krypton (Kr), et le Néon (Ne).
- le flux de gaz cible comprend au moins un gaz isotopique du gaz dont on cherche à connaître la perméation à travers le matériau.
- le flux de gaz cible comprend au moins un gaz choisi parmi :
   ∘ l'hélium (He) ;
   ∘ l'oxygène (O₂) ;
   ∘ l'oxyde de deutérium (D₂O) pour la mesure de la perméation à la vapeur d'eau ;
   ∘ l'isotope (D₂¹⁸O₂) de l'oxyde de deutérium pour la mesure de la perméation à la vapeur d'eau ;
   ∘ l'oxygène 18 (¹⁸O₂) pour la mesure de la perméation du matériau (M) à l'oxygène (O₂) ;
   ∘ l'oxygène 17 (¹⁷O₂) pour la mesure de la perméation du matériau (M) à l'oxygène (O₂) ;
   ∘ ou une combinaison de ces gaz.
- à l'étape b), on utilise un spectromètre de masse pour mesurer les gaz présents dans l'enceinte de mesure, le spectromètre de masse délivrant pour chaque gaz détecté ayant une masse différente un signal de mesure sous la forme d'un courant d'ionisation, la valeur du courant d'ionisation pour le gaz de référence étant utilisée pour corriger la valeur du courant d'ionisation des autres gaz détectés par comparaison avec la valeur du flux calibré de gaz de référence.
- le procédé est utilisé pour la mesure de la perméation à la vapeur d'eau.

On propose également un dispositif de mesure de perméation spécialement adapté pour la mise en oeuvre de ce procédé de mesure de perméation.

En particulier, on propose un dispositif de mesure de perméation de gaz à travers un matériau pour la mise en oeuvre du procédé proposé, comprenant :
- Une enceinte de perméation ayant une première chambre et une deuxième chambre séparées par le matériau,
- Une enceinte de mesure en communication fluidique avec la deuxième chambre et un analyseur pour analyser les gaz présents dans l'enceinte de mesure provenant de la deuxième chambre après avoir traversé le matériau par perméation,
caractérisé en ce qu'il comprend en outre au moins une ligne d'alimentation en gaz couplée d'une part à une source en gaz de référence, et d'autre part à l'enceinte de mesure pour alimenter en continu ladite enceinte de mesure avec le flux de gaz de référence.

Selon un aspect préféré mais non limitatifs de ce dispositif, la ligne d'alimentation comprend en outre une vanne positionnée entre la source en gaz de référence et l'enceinte de mesure, la vanne étant configurée pour réguler le flux de gaz de référence entrant dans l'enceinte de mesure.

### DESCRIPTION DES FIGURES

D'autres caractéristiques et avantages de l'invention ressortiront encore de la description qui suit, laquelle est purement illustrative et non limitative et doit être lue en regard des dessins annexés, sur lesquels :
- la figure 1, déjà commentée, est une représentation graphique d'une carte de contrôle de la mesure Hélium d'un échantillon de référence avec un spectromètre de masse d'un dispositif de mesure de l'art antérieur ;
- la figure 2 est une représentation graphique illustrant le courant d'ionisation de la masse 4 (hélium) pour deux mesures prises successivement sur un même film de polyester ;
- la figure 3 est une représentation graphique illustrant le courant d'ionisation de la masse 20 (eau) pour deux mesures prises successivement sur un même film de polyester ;
- la figure 4 est un schéma de principe illustrant le dispositif de mesure de perméation selon l'invention.

### DESCRIPTION DETAILLEE DE L'INVENTION

Les inventeurs ont découvert de manière surprenante que la variabilité de mesure d'un spectromètre de masse, pour une même pression partielle, n'est pas dépendante, en proportion, de la masse mesurée.

Il a en effet été réalisé successivement plusieurs mesures de perméation sur un même film de polyester dont les résultats sont illustrés sur les courbes des figures 2 et 3.

Plus précisément, il a d'abord été réalisé sur le film de polyester une première mesure de perméation à l'hélium (He) avec un dispositif de perméation classique utilisant un spectromètre de masse, tel que par exemple celui décrit dans le brevet US 6,624, 621. Les résultats de cette mesure sont illustrés sur la courbe C1_{He} de la figure 2 qui représente l'évolution du courant d'ionisation de la masse 4 au cours du temps. Cette première mesure de perméation à l'hélium a été suivie immédiatement d'une première mesure de perméation à l'eau (H2O), les résultats de cette mesure étant illustrés sur la courbe C1_{H2O} de la figure 3 qui représente l'évolution du courant d'ionisation de la masse 20 au cours du temps.

Il a ensuite été effectué de manière identique une deuxième mesure de perméation à l'hélium (He) puis une deuxième mesure de perméation à l'eau (H2O), les résultats de ces mesures étant respectivement illustrés sur la courbe C2_{He} de la figure 2 et sur la courbe C2_{H2O} de la figure 3.

Le tableau 1 ci-dessous indique la valeur du courant d'ionisation en conditions stabilisées pour chacune des mesures décrites ci-dessus :

**Tableau 1**

| | Hélium (en A/mbar) | Eau (en A) [à 38°C, avec 90% d'humidité relative (HR)] |
|---|---|---|
| Mesure 1 (M1) | 2,62E-11 | 5,86E-07 |
| Mesure 2 (M2) | 1,34E-11 | 2,89E-07 |
| Différence M2/M1 | -49% | -51% |

On constate que les chutes des courants d'ionisation mesurés entre la première et la deuxième mesure est sensiblement la même pour l'hélium et pour l'eau. Cela confirme que la variabilité de mesure d'un spectromètre de masse, pour une même pression partielle, n'est pas dépendante, en proportion, de la masse mesurée.

Ainsi, selon l'invention il est proposé d'utiliser pendant les mesures de perméation une fuite calibrée d'un gaz de référence et de mesurer ce gaz de manière continue en même temps que la mesure de perméation au gaz cible de l'échantillon.

Une telle fuite calibrée d'un gaz de référence est de préférence connectée directement dans l'enceinte de mesure où est utilisé un analyseur de gaz pour analyser les gaz ayant traversé l'échantillon par perméation, cet analyseur étant de préférence un spectromètre de masse.

Les variations constatées par l'analyseur sur la mesure de la fuite calibrée qui est par définition constante, sont donc liées à la variabilité constatée lors de l'usage de ce type d'appareil.

Ainsi un facteur de correction peut aisément être calculé et répercuté sur la mesure de perméation du gaz cible, de manière à avoir une mesure de perméation du gaz cible où les fluctuations dues à l'appareil de mesure sont neutralisées.

Pour les mesures de perméation, on utilise un gaz cible correspondant à un gaz dont on cherche à connaître la perméation à travers le matériau (M). Ainsi, on peut utiliser comme gaz cible le gaz spécifique dont on cherche à connaître la perméation à travers le matériau (M). De manière préféré, le gaz cible utilisé est un gaz isotopique du gaz dont on cherche à connaître la perméation à travers le matériau (M), c'est-à-dire une espèce ayant un nombre de masse différent. Ainsi, en utilisant par exemple un spectromètre de masse comme analyseur dans l'enceinte de mesure, il est possible de réduire les seuils de détection de la perméation de plusieurs ordres de grandeur. En effet, l'abondance isotopique naturelle de ces éléments étant très faible, la pollution de l'enceinte par ces espèces est d'autant moins importante.

De préférence, le gaz de référence utilisé pour le flux de gaz calibré utilisé est un gaz neutre vis-à-vis du ou des gaz cibles choisis. Un gaz neutre vis-à-vis d'un gaz cible est défini comme un gaz dont la présence avec ledit gaz cible ne vient pas influencer la mesure dudit gaz cible.

De préférence, on utilise un gaz neutre qui ne vient pas générer dans l'enceinte de mesure, lors de l'ionisation par le spectromètre de masse, une masse correspondant à la masse du ou des gaz cibles choisis.

Comme gaz de référence, on pourra par exemple utiliser un flux d'Argon (Ar), d'Azote (N), de Krypton (Kr), et/ou de Néon (Ne).

L'Argon (Ar) l'Azote (N), le Krypton (Kr), et/ou le Néon (Ne) sont en effet particulièrement avantageux puisqu'ils se comportent comme des gaz neutres vis-à-vis de la plupart des gaz cibles que l'on mesure généralement, en particulier vis-à-vis de l'hélium (He), l'oxygène (O₂) et/ou l'oxyde de deutérium (D₂O) pour la mesure de la perméation à la vapeur d'eau. Ils se comportent également comme un gaz neutre lorsque l'on utilise l'oxygène 18 (¹⁸O₂) et/ou l'oxygène 17 (¹⁷O₂) comme gaz isotopique pour la mesure de la perméation du matériau (M) à l'oxygène (O₂), ou encore vis-à-vis d'un isotope de l'oxyde de deutérium tel que l'isotope lourd (D₂¹⁸O₂).

L'usage d'une fuite calibrée en gaz neutre permet de corriger la variabilité inhérente à l'usage d'un spectromètre de masse avec les avantages complémentaires suivants.

Le flux calibré en gaz de référence est mesuré en continu pendant l'ensemble de la mesure de perméation du gaz. Ainsi, cela permet une correction en temps réel de la mesure de perméation, ce qui est particulièrement avantageux dans les mesures de perméation qui durent longtemps, comme par exemple les mesures de perméation à l'eau qui peuvent peut durer plusieurs semaines, et pour lesquelles une calibration ponctuelle avant ou après la mesure n'est généralement pas suffisante.

Par ailleurs, l'utilisation de cette fuite calibrée en gaz neutre permet d'éviter d'avoir recours à des calibrations utilisant une fuite calibrée en gaz cible (limité à une calibration initiale pour avoir une mesure absolue du gaz cible), ce qui limite la pollution de l'enceinte de mesure par le gaz cible et est ainsi favorable à la sensibilité de détection. En effet, le bruit de fond initial dans l'enceinte de mesure est ainsi fortement réduit voire totalement supprimé.

Cela simplifie aussi les procédures de mesures car une fuite calibrée en gaz cible doit être gérée par un ensemble de vannes et procédures associées et ne peut pas être mise en permanence en contact avec le spectromètre de masse car cela perturberait exagérément la mesure et limiterait considérablement la sensibilité de mesure.

Enfin, l'utilisation d'une fuite calibrée en gaz neutre permet une calibration pour des gaz comme l'eau pour lesquels il n'existait pas de solution simple de calibration. En effet, pour l'eau, la calibration se fait généralement par la mesure d'un matériau de référence de perméation à l'eau connue (une mesure qui dure au minimum plusieurs heures sans compter les temps de mise en place de l'échantillon et de l'atmosphère eau). L'usage d'une fuite permanente calibrée en gaz neutre lors de la mesure permet de s'affranchir de toute calibration particulière à l'eau.

Selon un mode de réalisation préféré, on utilise simultanément plusieurs gaz de référence différents dont le flux est calibré en entrée de la chambre de mesure.

Ainsi, on pourra appliquer un facteur de correction différent au signal du gaz cible selon l'intensité de ce dernier. Le facteur de correction choisi est de préférence celui défini par la mesure de la fuite calibrée la plus proche en intensité (courant d'ionisation) de la mesure du gaz cible au moment de la correction.

L'usage de fuites calibrées d'intensité différente permet de contrôler les éventuelles variations du spectromètre sur l'ensemble de la gamme de mesure. On peut contrôler ainsi la linéarité du signal sur l'ensemble de la gamme de mesure.

Les gaz de référence utilisés sont neutres par rapports au(x) gaz cible(s) et sont également neutres les uns vis-à-vis des autres (selon la définition de neutralité spécifiée plus haut).

Un moyen de réalisation préféré à l'usage de plusieurs fuites de référence est l'usage d'une seule fuite (i.e. un seul réservoir) contenant plusieurs gaz avec une intensité de fuite de chaque gaz déterminée par les pressions partielles respectives des gaz dans le réservoir de la fuite. Ce dernier moyen permet de simplifier le montage par l'usage d'un seul réservoir pour la fuite neutre.

Un autre moyen de couvrir le plus large spectre possible en termes d'intensité pour une fuite neutre est l'usage d'un variateur de flux en sortie de fuite (par exemple une vanne qui peut être pilotée) qui permet de varier l'intensité de la fuite. Dans ce dernier cas, la mesure sera ponctuelle du fait du temps nécessaire pour stabiliser la fuite pour chaque débit considéré.

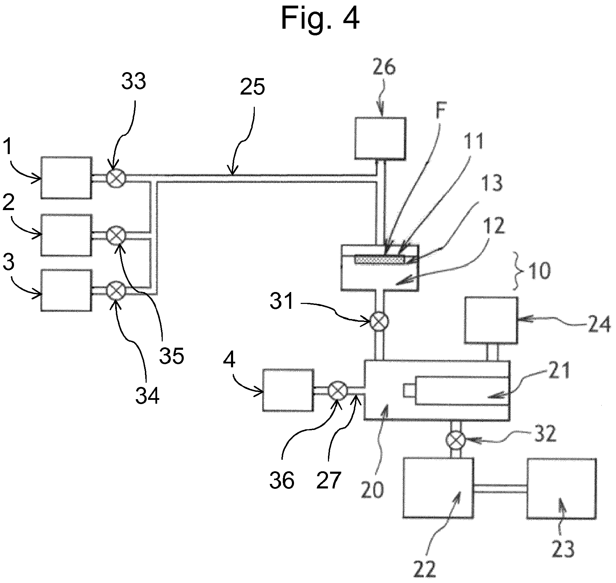

Un perméamètre pouvant être utilisé pour mettre en oeuvre le procédé de mesure de perméation présenté est illustré à la figure 4. Le processus de perméation d'un gaz à travers un matériau M repose sur les différences de pressions partielles de ce gaz, appelé aussi perméant, de part et d'autre du matériau M, échantillonné de manière générale sous la forme d'un film F.

Le perméamètre comprend une enceinte de perméation 10 qui comprend une première chambre 11 et une deuxième chambre 12 séparées par le film F de matériau M. Pour l'étude des différences de pressions partielles du perméant entre la première chambre 11, située en amont dans le dispositif, et la deuxième chambre 12, située en aval dans le dispositif, il est important d'assurer une pression partielle avale nulle, ou négligeable, par rapport à la pression amont. Une atmosphère contrôlée, avec une pression amont déterminée en perméant(s), est réalisée au-dessus du film à tester. En dessous du film, la deuxième chambre 12, dans laquelle un vide poussé est maintenu, permet d'assurer la condition de pression avale nulle, ou négligeable, au regard de la pression amont.

Afin d'éviter une déformation excessive du film F, l'enceinte de perméation 10 comprend de préférence un moyen support 13, tel qu'un fritté métallique poreux. Le film F repose ainsi sur ce moyen de support 13 qui est disposé entre la première chambre 11 et la deuxième chambre 12, et est formé de manière à permettre une transmission des gaz.

En aval du film F, connecté à la deuxième chambre 12, on prévoit un moyen d'analyse adapté pour suivre la pression partielle avale en perméant(s). Le moyen d'analyse du dispositif de mesure comprend une enceinte de mesure 20 en communication fluidique avec la deuxième chambre 12. De préférence, l'enceinte de mesure 20 est raccordée à la deuxième chambre 12 par l'intermédiaire d'une vanne 31 permettant d'isoler, si nécessaire, l'enceinte de mesure 20 de la deuxième chambre 12. Cette enceinte de mesure 20 est mise sous vide par un système de pompage comprenant une pompe primaire 23 et une pompe secondaire 22, qui sont préférentiellement placées en série l'une par rapport à l'autre. L'enceinte de mesure et le système de pompage sont reliés par l'intermédiaire d'une vanne 32.

En outre, le moyen d'analyse comprend un analyseur 21 de gaz résiduels placés dans l'enceinte de mesure 20 sous vide, et disposé de manière à pouvoir analyser avec la meilleure sensibilité possible les gaz provenant de la deuxième chambre 12 avant d'être aspirés par les pompes 22 et 23. L'analyseur 21 pourra par exemple être un spectromètre de masse placé dans une enceinte de mesure 20 mise sous vide par une pompe primaire sèche 23 et une turbo pompe 22 placées en série. Pour une meilleure sensibilité, le spectromètre est positionné sur le chemin du flux de gaz entre la deuxième chambre 12 et les pompes 22 et 23. Un capteur de pression 24 peut également être prévu pour mesurer la pression totale régnant au sein de l'enceinte de mesure 20.

Le spectromètre de masse 21 utilisé ne peut fonctionner qu'à basses pressions, et nécessite donc une enceinte de mesure 20 sous un vide secondaire (de l'ordre de 10⁻⁴ torr maximum). De ce fait, on pompe en permanence l'enceinte de mesure 20 avec les pompes 22 et 23 pendant le transfert des gaz par perméation à travers le film échantillon F. Ainsi, la pression partielle de chacun des gaz ayant traversé l'échantillon augmente jusqu'à se stabiliser lorsque le flux de perméation devient égal au flux pompé. Le spectromètre de masse 21 délivre un signal qui est un courant résultant de l'ionisation des atomes d'une espèce mesurée, qui est proportionnel à la pression partielle de cette espèce. On appelle ce signal le courant d'ionisation. Le pompage étant efficace et la perméation des échantillons étant faible, la pression de stabilisation est également très faible de sorte que l'on peut considérer que la pression sur la face avale du film échantillon F reste quasi nulle au cours du temps. Le flux d'un perméant à travers le film échantillon F est donc proportionnel à la pression partielle du perméant suivi quand le régime permanent est atteint. Pour des flux de perméation extrêmement bas, la fermeture de la vanne 32 permettra une mesure cumulative dans la limite de pression totale fixée par le moyen d'analyse 21 soit de l'ordre de 10⁻⁴ torr ce qui permettra de respecter le critère de pression avale négligeable au regard de la pression amont.

A partir du flux de perméation ainsi calculé, on peut en déduire la perméabilité du matériau M au gaz considéré en considérant l'épaisseur e du film échantillon F.

Le moyen d'alimentation en gaz du dispositif de mesure comprend une ligne principale d'alimentation en gaz 25 par l'intermédiaire de laquelle un flux de gaz cible peut être injecté dans la première chambre 11 de l'enceinte de perméation 10. Le flux de gaz cible comprend un ou plusieurs gaz dont on cherche à mesurer la perméation à travers le matériau M.

On pourra par exemple prévoir que la ligne d'alimentation soit couplée à plusieurs sources de gaz (1 ;2 ;3) par l'intermédiaire de vannes (33 ;34 ;35) permettant de sélectionner les gaz à injecter dans le flux de gaz cible.

La mesure de la pression injectée en gaz cible se fait en général d'un moyen de contrôle de pression 26 placé directement sur la première chambre de l'enceinte de perméation 10.

Le dispositif de perméation proposé présente la particularité d'avoir une ligne complémentaire d'alimentation en gaz (27) qui permet d'injecter en continu un flux en gaz de référence dans l'enceinte de mesure (20).

Cette ligne complémentaire d'alimentation en gaz (27) est donc couplée d'une part à une source (4) en gaz de référence, et d'autre part à l'enceinte de mesure (20) pour alimenter en continu ladite enceinte de mesure (20) avec le flux de gaz de référence.

Selon un mode de réalisation particulier, la ligne complémentaire d'alimentation en gaz (27) comprend en outre une vanne (36) permettant de réguler le débit du flux de gaz de référence entrant dans l'enceinte de mesure (20). Une telle vanne (36) est optionnelle mais peut être particulièrement avantageuse lorsque l'on souhaite générer plusieurs flux de débits différents à partir du même gaz de référence.

Il est possible de coupler la ligne complémentaire d'alimentation en gaz (27) directement sur la deuxième chambre (12) de l'enceinte de perméation (10), mais il est préférable de la coupler directement sur l'enceinte de mesure (20) comme décrit ci-dessus car cela permet de pouvoir isoler correctement la deuxième chambre (12), notamment lors des purges éventuelles, et le temps d'équilibrage de la mesure du gaz de référence par l'analyseur (21) est aussi accéléré lorsque la ligne complémentaire d'alimentation en gaz (27) est directement branchée sur l'enceinte de mesure (20).

Il est à noter que la configuration proposée pour le perméamètre n'est pas limitative et que d'autres agencements peuvent être envisagés. En particulier, il pourrait être prévu plusieurs lignes complémentaires d'alimentation en gaz branchées au niveau de l'enceinte de mesure (20) de manière à pouvoir générer plusieurs fuites calibrées différentes.

### REFERENCES BIBLIOGRAPHIQUES

- US 6,624,621
- US 2010/0223979

## Revendications

1. Procédé de mesure de perméation de gaz à travers un matériau (M) agencé dans une enceinte de perméation (10) comprenant une première (11) et une deuxième chambre (12), la première chambre (11) étant séparée de la deuxième (12) chambre par le matériau (M), et la deuxième chambre (12) étant en communication fluidique avec une enceinte de mesure (20), le procédé comprenant les étapes suivantes :
a) Alimentation en gaz de l'enceinte de perméation (10) au cours de laquelle on alimente la première chambre (11), avec un flux de gaz cible comprenant au moins un gaz cible correspondant à un gaz dont on cherche à connaître la perméation à travers le matériau (M), et alimentation simultanée en gaz de l'enceinte de mesure (20) avec au moins un flux calibré comprenant au moins un gaz de référence, le gaz de référence étant différent du gaz cible ;
b) Pendant l'étape d'alimentation en gaz, mesure dans l'enceinte de mesure (20) du gaz de référence présent à un instant (t) et du gaz cible présent au même instant (t) provenant de la deuxième chambre (12) après avoir traversé le matériau (M) par perméation ;
c) Calcul d'un facteur de correction à l'instant (t) par comparaison de la mesure du gaz de référence présent à l'instant (t) avec le flux calibré d'alimentation en gaz de référence ; et
d) Détermination de la perméation du matériau (M) audit gaz, à partir de la mesure du gaz cible présent à l'instant (t) corrigée du facteur de correction à l'instant (t).

2. Procédé selon la revendication 1, dans lequel les étapes b) et c) de mesure des gaz présents dans l'enceinte de mesure (20) et de calcul du facteur de correction sont effectuées plusieurs fois au cours du temps pendant l'étape a) d'alimentation en gaz, l'étape d) de calcul de la perméation du matériau (M) au gaz étant réalisée à partir des différentes mesures du gaz cible au cours du temps, chaque mesure de gaz cible étant corrigée du facteur de correction correspondant.

3. Procédé selon l'une quelconque des revendications 1 ou 2, dans lequel le gaz de référence est un gaz neutre vis-à-vis du gaz cible.

4. Procédé selon l'une quelconque des revendications 1 à 3, dans lequel le flux calibré de gaz de référence comprend plusieurs gaz de référence différents, où l'étape b) comprend la mesure simultanée des différents gaz de référence présents dans l'enceinte de mesure (20) à l'instant (t), et où à l'étape c) on calcule plusieurs facteurs de correction à l'instant (t) à partir de la comparaison de la mesure de chaque gaz de référence présent à l'instant (t) avec le flux calibré du gaz de référence correspondant.

5. Procédé selon la revendication 4, dans lequel à l'étape d), on choisit le facteur de correction correspondant au gaz de référence dont la mesure à l'instant (t) est la plus proche en intensité de la mesure du gaz cible présent à l'instant (t).

6. Procédé selon l'une quelconque des revendications 1 à 5, dans lequel le flux de gaz cible comprend plusieurs gaz cibles différents, correspondant à plusieurs gaz dont on cherche à connaître la perméation à travers le matériau (M), l'étape b) comprenant la mesure simultanée des différents gaz cibles présents dans l'enceinte de mesure (20) à l'instant (t).

7. Procédé selon l'une quelconque des revendications 1 à 6, dans lequel le flux de gaz de référence comprend au moins un gaz choisi parmi l'Argon (Ar), l'Azote (N), le Krypton (Kr), et le Néon (Ne).

8. Procédé selon l'une quelconque des revendications 1 à 7, dans lequel le flux de gaz cible comprend au moins un gaz isotopique du gaz dont on cherche à connaître la perméation à travers le matériau (M).

9. Procédé selon l'une quelconque des revendications 1 à 8, dans lequel le flux de gaz cible comprend au moins un gaz choisi parmi :
- l'hélium (He) ;
- l'oxygène (O₂) ;
- l'oxyde de deutérium (D₂O) pour la mesure de la perméation à la vapeur d'eau ;
- l'isotope (D₂¹⁸O₂) de l'oxyde de deutérium pour la mesure de la perméation à la vapeur d'eau ;
- l'oxygène 18 (¹⁸O₂) pour la mesure de la perméation du matériau (M) à l'oxygène (O₂) ;
- l'oxygène 17 (¹⁷O₂) pour la mesure de la perméation du matériau (M) à l'oxygène (O₂) ;
- ou une combinaison de ces gaz.

10. Procédé selon l'une quelconque des revendications 1 à 9, dans lequel à l'étape b), on utilise un spectromètre de masse pour mesurer les gaz présents dans l'enceinte de mesure (20), le spectromètre de masse délivrant pour chaque gaz détecté ayant une masse différente un signal de mesure sous la forme d'un courant d'ionisation, la valeur du courant d'ionisation pour le gaz de référence étant utilisée pour corriger la valeur du courant d'ionisation des autres gaz détectés par comparaison avec la valeur du flux calibré de gaz de référence.

11. Procédé selon l'une quelconque des revendications 1 à 10 utilisé pour la mesure de la perméation à la vapeur d'eau.

## Patentansprüche

1. Verfahren zur Messung der Gaspermeation durch ein Material (M), das in einem Permeationsraum (10) angeordnet ist, welcher eine erste Kammer (11) und eine zweite Kammer (12) umfasst, wobei die erste Kammer (11) durch das Material (M) von der zweiten Kammer (12) getrennt ist und wobei die zweite Kammer (12) in Fluidverbindung mit einem Messraum (20) steht, wobei das Verfahren folgende Schritte umfasst:
a) Zuführen von Gas zu dem Permeationsraum (10), während dem die erste Kammer (11) mit einem Zielgasstrom versorgt wird, der mindestens ein Zielgas enthält, das einem Gas entspricht, dessen Permeation durch das Material (M) ermittelt werden soll, und gleichzeitiges Zuführen von Gas zu dem Messraum (20) mit mindestens einem kalibrierten Strom, der mindestens ein Referenzgas enthält, wobei sich das Referenzgas von dem Zielgas unterscheidet;
b) während des Schrittes des Zuführens von Gas, Messen in dem Messraum (20) des Referenzgases, das zu einem bestimmten Zeitpunkt (t) vorhanden ist, und des Zielgases, das zu dem gleichen Zeitpunkt (t) vorhanden ist und aus der zweiten Kammer (12) kommt, nachdem es durch Permeation das Material (M) durchquert hat;
c) Berechnen eines Korrekturfaktors zu dem Zeitpunkt (t) durch Vergleichen des Messwertes des Referenzgases, das zu dem Zeitpunkt (t) vorhanden ist, mit dem kalibrierten Strom zur Versorgung mit Referenzgas; und
d) Bestimmen der Permeation des Materials (M) mit dem Gas, ausgehend von dem Messwert des Zielgases, das zu dem Zeitpunkt (t) vorhanden ist, korrigiert um den Korrekturfaktor zu dem Zeitpunkt (t).

2. Verfahren nach Anspruch 1, wobei die Schritte b) und c) zur Messung der in dem Messraum (20) vorhandenen Gase und zur Berechnung des Korrekturfaktors im Laufe der Zeit während des Schritts a) des Zuführens von Gas mehrmals durchgeführt werden, wobei der Schritt d) des Berechnens der Permeation des Materials (M) mit dem Gas ausgehend von den verschiedenen Messwerten des Zielgases über einen Zeitraum durchgeführt wird, wobei jeder Messwert des Zielgases um den entsprechenden Korrekturfaktor korrigiert wird.

3. Verfahren nach einem der Ansprüche 1 oder 2, wobei es sich bei dem Referenzgas um ein in Bezug auf das Zielgas neutrales Gas handelt.

4. Verfahren nach einem der Ansprüche 1 bis 3, wobei der kalibrierte Referenzgasstrom mehrere verschiedene Referenzgase umfasst, wobei der Schritt b) die gleichzeitige Messung der verschiedenen Referenzgase in dem Messraum (20) zum Zeitpunkt (t) umfasst und wobei in Schritt c) ausgehend von dem Vergleich des Messwertes jedes einzelnen Referenzgases, das zum Zeitpunkt (t) vorhanden ist, mit dem kalibrierten Strom des jeweiligen Referenzgases mehrere Korrekturfaktoren zum Zeitpunkt (t) berechnet werden.

5. Verfahren nach Anspruch 4, wobei in Schritt d) der Korrekturfaktor gewählt wird, der dem Referenzgas entspricht, dessen Messwert zum Zeitpunkt (t) hinsichtlich der Intensität dem Messwert des Zielgases, das zum Zeitpunkt (t) vorhanden ist, am nächsten liegt.

6. Verfahren nach einem der Ansprüche 1 bis 5, wobei der Zielgasstrom mehrere verschiedene Zielgase umfasst, die mehreren Gasen entsprechen, deren Permeation durch das Material (M) bestimmt werden soll, wobei der Schritt b) die gleichzeitige Messung der verschiedenen Zielgase umfasst, die in dem Messraum (20) zum Zeitpunkt (t) vorhanden sind.

7. Verfahren nach einem der Ansprüche 1 bis 6, wobei der Referenzgasstrom mindestens ein Gas ausgewählt aus Argon (Ar), Stickstoff (N), Krypton (Kr) und Neon (Ne) umfasst.

8. Verfahren nach einem der Ansprüche 1 bis 7, wobei der Zielgasstrom mindestens ein Isotopengas des Gases umfasst, dessen Permeation durch das Material (M) bestimmt werden soll.

9. Verfahren nach einem der Ansprüche 1 bis 8, wobei der Zielgasstrom mindestens ein Gas umfasst ausgewählt aus:
- Helium (He);
- Sauerstoff (O₂) ;
- Deuteriumoxid (D₂O) zur Messung der Wasserdampfpermeation;
- Isotop (D₂¹⁸O₂) des Deuteriumoxids zur Messung der Wasserdampfpermeation;
- Sauerstoff 18 (¹⁸O₂) zur Messung der Permeation des Materials (M) mit Sauerstoff (O₂);
- Sauerstoff 17 (¹⁷O₂) zur Messung der Permeation des Materials (M) mit Sauerstoff (O₂);
- oder eine Kombination dieser Gase.

10. Verfahren nach einem der Ansprüche 1 bis 9, wobei in Schritt b) ein Massenspektrometer zur Messung der in dem Messraum (20) vorhandenen Gase verwendet wird, wobei das Massenspektrometer, das für jedes erkannte Gas mit einer anderen Masse ein Messsignal in Form eines Ionisationsstroms liefert, wobei der Wert des Ionisationsstroms für das Referenzgas verwendet wird, um den Wert des Ionisationsstroms der anderen erkannten Gase durch Vergleich mit dem Wert des kalibrierten Referenzgasstroms zu korrigieren.

11. Verfahren nach einem der Ansprüche 1 bis 10, das zur Messung der Wasserdampfpermeation verwendet wird.

## Claims

1. A method for measuring gas permeation through a material (M) arranged in a permeation enclosure (10) comprising a first chamber (11) and a second chamber (12), the first chamber (11) being separated from the second chamber (12) by the material (M), and the second chamber (12) being in fluidic communication with a measurement enclosure (20), the method comprising the following steps:
a) Supplying gas to the permeation enclosure (10) during which the first chamber (11) is supplied with a target gas flow comprising at least one target gas corresponding to a gas for which one tries to determine the permeation through the material (M), and simultaneously supplying gas to the measurement enclosure (20) with at least one calibrated flow comprising at least one reference gas, the reference gas being different from the target gas;
b) during the step of supplying gas, measuring in the measurement enclosure (20) the reference gas present at an instant (t) and the target gas present at the same instant (t) stemming from the second chamber (12) after having passed through the material (M) by permeation;
c) calculating a correction factor at instant (t) by comparing the measurement of the reference gas present at instant (t) with the calibrated flow of reference gas; and
d) determining the permeation of the material (M) to said gas, from the measurement of the target gas present at instant (t) corrected by the correction factor at instant (t).

2. The method of claim 1, wherein the steps b) and c) of measuring the gases present in the measurement enclosure (20) and of calculating the correction factor are carried out several times overtime during step a) of supplying gas, said step d) of calculating the permeation of the material (M) to the gas being carried out from different measurements of the target gas overtime, each measurement of the target gas being corrected by the corresponding correction factor.

3. The method of any one of claims 1 or 2, wherein the reference gas is a neutral gas towards the target gas.

4. The method of any one of claims 1 to 3, wherein the calibrated flow of reference gas comprises several different reference gases, wherein step b) comprises the simultaneous measurement of the different reference gases present in the measurement enclosure (20) at instant (t), and wherein in step c) several correction factors are calculated at instant (t) from the comparison of the measurement of each reference gas present at instant (t) with the calibrated flow of the corresponding reference gas.

5. The method of claim 4, wherein in step d), one selects the correction factor corresponding to the reference gas for which the measurement at instant (t) is the closet in intensity to the measurement of the target gas present at instant (t).

6. The method of any one of claims 1 to 5, wherein the target gas flow comprises several different target gases, corresponding to several gases for which one tries to determine the permeation through the material (M), step b) comprising the simultaneous measurement of different target gases present in the measurement enclosure (20) at instant (t).

7. The method of any one of claims 1 to 6, wherein the calibrated flow of reference gas comprises at least one gas selected from argon (Ar), nitrogen (N), krypton (Kr), and neon (Ne).

8. The method of any one of claims 1 to 7, wherein the target gas flow comprises at least one isotope gas of the gas for which one tries to determine the permeation through the material (M).

9. The method of any one of claims 1 to 8, wherein the target gas flow comprises at least one gas selected from among:
- helium (He);
- oxygen (O₂);
- deuterium oxide (D₂O) for measuring permeation to water vapor;
- the isotope (D₂¹⁸O₂) of deuterium oxide for measuring the permeation to water vapor;
- oxygen 18 (¹⁸O₂) for measuring the permeation of the material (M) to oxygen (O₂);
- oxygen 17 (¹⁷O₂) for measuring the permeation of the material (M) to oxygen (O₂);
- or a combination thereof.

10. The method of any one of claims 1 to 9, wherein in step b), a mass spectrometer is used for measuring the gases present in the measurement enclosure (20), the mass spectrometer delivering for each detected gas having a different mass, a measurement signal as an ionization current, the value of the ionization current for the reference gas being used for correcting the value of the ionization current of the other detected gases by comparison with the value of the reference gas calibrated flow.

11. The method of any one of claims 1 to 10 used for measuring permeation to water vapor.
